(19) Europäisches Patentamt
European Patent Office
Office européen des brevets

(11) EP 1 069 128 B1

(12) EUROPÄISCHE PATENTSCHRIFT

(45) Veröffentlichungstag und Bekanntmachung des Hinweises auf die Patenterteilung:
**10.11.2004 Patentblatt 2004/46**

(51) Int Cl.[7]: **C07F 5/04**, C07F 7/08, C07F 7/18, H01M 10/40

(21) Anmeldenummer: **00113144.0**

(22) Anmeldetag: **29.06.2000**

# (54) Verfahren zur Herstellung von Lithiumkomplexsalzen zur Anwendung in elektrochemischen Zellen

Process for preparing complex lithium salts for use in electrochemical cells

Procédé de préparation de sels de lithium complexes pour des cellules electrochimiques

(84) Benannte Vertragsstaaten:
**DE FR GB**

(30) Priorität: **10.07.1999 DE 19932317**

(43) Veröffentlichungstag der Anmeldung:
**17.01.2001 Patentblatt 2001/03**

(73) Patentinhaber: **MERCK PATENT GmbH
64293 Darmstadt (DE)**

(72) Erfinder:
- **Schmidt, Michael, Dr.
64331 Weiterstadt (DE)**
- **De Meijere, Armin, Prof. Dr.
37077 Göttingen (DE)**
- **Leonov, Andrei
37077 Göttingen (DE)**

(56) Entgegenhaltungen:
**EP-A- 1 035 612** **WO-A-98/07729**
**DE-A- 19 757 126**

- **BARTHEL, J. ET AL: "Lithium bis[5-fluoro-2-olato-1-benzenesulfonato(2- )-O, O']borate(1-), a new anodically and cathodically stable salt for electrolytes of lithium-ion cells" J. ELECTROCHEM. SOC., Bd. 145, Nr. 2, 1998, Seiten I17-I20, XP001064722**
- **BABIN, P. ET AL: "A practical regiospecific synthesis of ortho- and meta-hydroxybenzenesulfonic acids" BULL. SOC. CHIM. FR., Bd. 129, Nr. 1, 1992, Seiten 25-28, XP001073515**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 069 128 B1

Printed by Jouve, 75001 PARIS (FR)

## Beschreibung

Die Erfindung betrifft ein Verfahren zur Herstellung von Lithiumkomplexsalzen und deren Anwendung in elektrochemischen Zellen.

Lithium-Ionen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb.
Diese Batterien bestehen aus Kathode, Anode, Separator und einem nichtwäßrigen Elektrolyt. Als Kathode werden typischerweise $Li(MnMe_z)_2O_4$, $Li(CoMe_z)O_2$, $Li(CoNi_xMe_z)O_2$ oder andere Lithium-Interkalation und Insertions-Verbindungen verwendet. Anoden können aus Lithium-Metall, Kohlenstoffen, Graphit, graphitischen Kohlenstoffen oder anderen Lithium-Interkalation und Insertions-Verbindungen oder Legierungsverbindungen bestehen. Als Elektrolyt werden Lösungen mit Lithiumsalzen wie $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen in aprotischen Lösungsmitteln verwendet.

Die gängigen Lithiumleitsalze lassen verschiedene Nachteile erkennen. Einige Leitsalze weisen geringe Zyklisierausbeuten auf (z.B. $LiBF_4$). Andere Leitsalze verfügen über eine geringe thermische Stabilität (z.B. $LiPF_6$), und wieder andere Leitsalze sind wegen ihrer Giftigkeit und geringen Umweltverträglichkeit (z.B. $LiAsF_6$) nicht besonders geeignet.

In WO 98/07729 wird daher eine neue Klasse von Leitsalzen, die Lithium-Boratkomplexe, beschrieben. In Zyklisierungsversuchen haben diese Verbindungen besonders gute Ergebnisse gezeigt und sich als besonders stabil erwiesen. In Kombination mit anderen Salzen weisen diese Komplexe einen synergistischen Stabilisierungseffekt gegenüber einer Oxidation auf.

Mit Lithiumbis[5-fluoro-2-olato-benzolsulfonato(2-)O,O']borat(1-), bekannt aus J. Barthel et al, J. Electrochem. Soc. 145 (2), 1998, wird ein Leitsalz beschrieben, das aufgrund seiner Eigenschaften als vielversprechendes Leitsalz zum Einsatz in Lithiumionen-Batterien zu bewerten ist. Problematisch ist jedoch die kostenintensive und komplizierte Synthese der Vorstufen. Lithiumbis[5-fluoro-2-olatobenzolsulfonato(2-)O,O']borat(1-) wurde nach J. Barthel et al. ausgehend von dem entsprechenden $\alpha$-Chlorphenol durch Umsetzung mit Chlortrimethylsilan über den in $\alpha$-Stellung silylierten Phenylsilylether und anschließender Umsetzung mit $ClSO_3Si(CH_3)_3$ und Lithiumtetramethanolatborat(1-) hergestellt.

In der Literatur (Speier, The Preparation and Properties of (Hydroxyorgano)-silanes and related compounds, J. Am. Chem. Soc. 74 (1952), 1003) wird die Synthese von 2-Hydroxy-benzolsulfonsäuren und ihren Derivaten bisher nur in einem aufwendigen dreistufigen Verfahren mit Gesamtausbeuten im Bereich zwischen 40 und 70% beschrieben.

EP 1 035 612 mit Anmeldetag vom 04.02.2000 beschreibt die Verwendung der erfindungsgemäßen Verbindungen, hergestellt nach dem erfindungsgemäßen Verfahren, wie beschrieben in der prioritätsgebenden DE 19944603, als zusätzlich mögliche Additive in Elektrolyten. EP 1 035 612 fällt unter Art. 54(3) EPÜ.

Gegenstand der vorliegenden Erfindung ist es deshalb, ein einfaches Verfahren zur Synthese von Lithiumkomplexsalzen zur Verfügung zu stellen.

Die erfindungsgemäße Aufgabe wird gelöst durch ein Verfahren zur Herstellung von Lithiumkomplexsalzen der allgemeinen Formel

Li 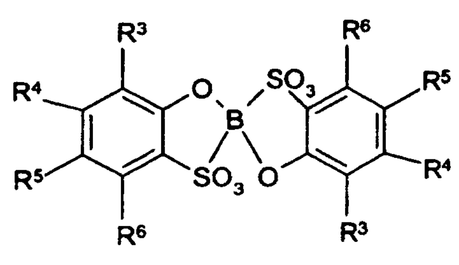 (I)

wobei

$R^3$-$R^6$ jeweils einzeln oder paarweise, gegebenenfalls durch eine Einfach- oder Doppelbindung direkt miteinander verbunden, folgende Bedeutung haben können:

1. Alkyl ($C_1$ bis $C_6$),Alkyloxy ($C_1$ bis $C_6$) oder Halogen (F, Cl, Br)
2. ein aromatischer Ring aus den Gruppen
Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann
Pyridyl, Pyrazyl oder Pyrimidyl, der unsubstituiert oder ein- bis vierfach durch Alkyl ($C_1$ bis $C_6$), Alkoxyl ($C_1$ bis $C_6$)

oder Halogen (F, Cl, Br) substituiert sein kann
dadurch gekennzeichnet, daß

a) 3-, 4-, 5-, 6-substituiertes Phenol (III) in einem geeigneten Lösungsmittel mit Chlorsulfonsäure versetzt wird,
b) das Zwischenprodukt (IV) aus a) mit Chlortrimethylsilan umgesetzt, filtriert und fraktioniert destilliert wird,
c) das Zwischenprodukt (II) aus b) mit Lithiumtetramethanolatborat(1-), in einem geeigneten Lösungsmittel umgesetzt und daraus das Endprodukt (I) isoliert wird.

Es wurde gefunden, daß ausgehend von 3-, 4-, 5-, 6-substituierten Phenol (III) in einer 3-stufigen Synthese Lithiumkomplexsalze hergestellt werden können. Das Edukt ist eine Verbindung der allgemeinen Formel:

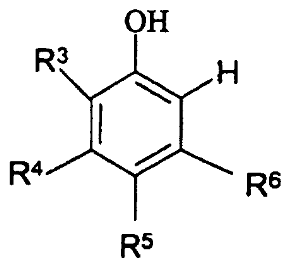

(III)

$R^3$-$R^6$ können jeweils einzeln oder paarweise, gegebenenfalls durch eine Einfach- oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)
2. ein aromatischer Ring aus den Gruppen
Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann
Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann.

Das Zwischenprodukt der allgemeinen Formel (II):

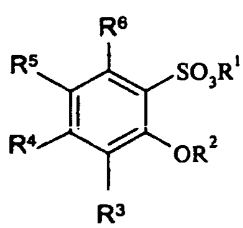

(II)

wobei $R^1$ und $R^2$ jeweils einzeln oder gemeinsam folgende Bedeutung haben:

$R^1$, $R^2$: H und Trimethylsilyl
$R^3$-$R^6$ können jeweils einzeln oder paarweise, gegebenenfalls durch eine Einfach- oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)

2. ein aromatischer Ring aus den Gruppen

Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann
Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,

kann in Ausbeuten zwischen 80 und 90% synthetisiert werden.

Das Endprodukt der allgemeinen Formel (I) kann allein oder in Kombination mit anderen Lithiumsalzen und/oder Boratkomplexen in Elektrolyten von Lithiumbatterien eingesetzt werden. Dabei muß auf einen sehr geringen Gehalt an natriumhaltigen Verunreinigungen geachtet werden. Aufgrund der elektrochemischen Eigenschaften (Natrium ist unedler als Lithium) werden sonst Natriumionen in die Struktur der negativen Elektroden eingebaut. Dies führt letzendlich zum Ausfall der Batterie. Bei dem erfindungsgemäßen Verfahren kann auf die Verwendung von Natrium verzichtet werden.

Damit sind die erfindungsgemäß hergestellten Lithiumboratkomplexe besonders für die Verwendung in elektrochemischen Zellen geeignet. Die Lithiumboratkomplexe können mit anderen Lithiumsalzen oder auch mit Boratkomplexen in Elektrolyten für sekundäre Lithiumbatterien verwendet werden.

Die Lithiumboratkomplexe können auch in Elektrolyten mit herkömmlichen Leitsalzen verwendet werden. Geeignet sind z.B. Elektrolyte mit Leitsalzen ausgewählt aus der Gruppe $LiPF_6$, $LiBF_4$, $LiClO_4$, $Li\text{-}AsF_6$, $LiCF_3SO_3$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ \; B^-(OR^1)_m(OR^2)_p$$

worin,

m und p 0, 1, 2, 3 oder 4 mit m+p=4 und
$R^1$ und $R^2$ gleich oder verschieden sind,

gegebenenfalls durch eine Einfach- oder Doppelbindung direkt miteinander verbunden sind,
jeweils einzeln oder gemeinsam die Bedeutung eines aromatischen oder aliphatischen Carbon-, Dicarbon- oder Sulfonsäurerestes haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder
jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder einbis vierfach durch A oder Hal substituiert sein kann,
haben und

Hal F, Cl oder Br

und

A Alkyl mit 1 bis 6 C-Atomen, das ein- bis dreifach halogeniert

sein kann, bedeuten. Ebenso geeignet sind Alkalialkoholate der allgemeinen Formel

$$Li^+ \; OR^-$$

sind, worin R
die Bedeutung eines aromatischen oder aliphatischen Carbon-, Dicarbon- oder Sulfonsäurerestes hat, oder
die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder
die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder
die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,
hat und

Hal F, Cl, oder Br,

und

A Alkyl mit 1 bis 6 C-Atomen, das ein- bis dreifach halogeniert sein kann.

Ebenso können die Elektrolyte Verbindungen der folgenden Formel (DE 199 41 566)

$$[([R^1(CR^2R^3)_k]_lA_x)_yKt]^{+}\ ^{-}N(CF_3)_2$$

wobei

Kt= N, P, As, Sb, S, Se
A= N, P, P(O), O, S, S(O), $SO_2$, As, As(O), Sb, Sb(O)
$R^1$, $R^2$ und $R^3$ gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,
A kann in verschiedenen Stellungen in $R^1$, $R^2$ und/oder $R^3$ eingeschlosses sein,
Kt kann in cyclischen oder heterocyclischen Ring eingeschlossen sein,
die an Kt gebundenen Gruppen können gleich oder verschieden sein mit

n= 1-18

m= 3-7

k= 0, 1-6

l= 1 oder 2 im Fall von x=1 und 1 im Fall x=0

x= 0,1

y= 1-4

bedeuten, enthalten. Das Verfahren zur Herstellung dieser Verbindungen ist dadurch gekennzeichnet, daß ein Alkalisalz der allgemeinen Formel

$$D^{+}\ ^{-}N(CF_3)_2 \quad (II)$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ ^{-}E \quad (III)$$

wobei

Kt, A, $R^1$, $R^2$, $R^3$, k, l, x und y die oben angegebene Bedeutung haben und
-E $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird.

Aber auch Elektrolyte enthaltend Verbindungen der allgemeinen Formel (DE 199 53 638)

$$X\text{-}(CYZ)_m\text{-}SO_2N(CR^1R^2R^3)_2$$

mit

| | |
|---|---|
| X | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, m≠0 |
| n | 1-9 |
| k | 0, falls m=0 und k=1, falls m=1-9, |

hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

$$M^{x+}[EZ]^{y-}_{x/y}$$

worin bedeuten:

| | |
|---|---|
| x,y | 1,2,3,4,5,6 |
| $M^{x+}$ | ein Metallion |
| E | eine Lewis-Säure, ausgewählt aus der Gruppe |

$BR^1R^2R^3$, $AlR^1R^2R^3$, $PR^1R^2R^3R^4R^5$, $AsR^1R^2R^3R^4R^5$, $VR^1R^2R^3R^4R^5$,
$R^1$ bis $R^5$ gleich oder verschieden, gegebenenfalls durch eine Einfach- oder Doppelbildung direkt miteinander verbunden sind, jeweils einzeln oder gemeinsam die Bedeutung
eines Halogens (F, Cl, Br),
eines Alkyl- oder Alkoxyrestes ($C_1$ bis $C_8$) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann
eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und
Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei
$R^6$ bis $R^8$ gleich oder verschieden sind, gegebenenfalls durch eine Einfach- oder Doppelbindung direkt miteinander verbunden sind, jeweils einzeln oder gemeinsam die Bedeutung
eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

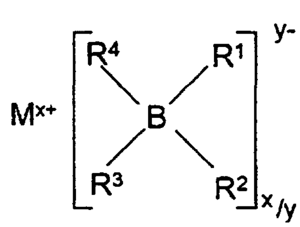

worin bedeuten:

| | |
|---|---|
| M | ein Metallion oder Tetraalkylammoniumion |
| x,y | 1, 2, 3, 4, 5 oder 6 |

$R^1$ bis $R^4$ gleich oder verschieden, gegebenenfalls durch eine Einfach- oder Doppelbindung direkt miteinander verbundener Alkoxyoder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Die Additive können auch in Elektrolyte eingesetzt werden, die Lithiumfluoralkylphosphate der allgemeinen Formel (I) enthalten,

$$Li^+[PF_x(C_yF_{2y+1-z}H_z)_{6-x}]^- \qquad (I)$$

worin

$$1 \leq x \leq 5$$

$$3 \leq y \leq 8$$

$$0 \leq z \leq 2y + 1$$

bedeuten und die Liganden ($C_yF_{2y+1-z}H_z$) gleich oder verschieden sein können, wobei die Verbindungen der allgemeinen Formel (I'),

$$Li^+[PF_a(CH_bF_c(CF_3)_d)_e]^- \qquad (I)$$

in der a eine ganze Zahl von 2 bis 5, b = 0 oder 1, c = 0 oder 1, d = 2 und
e eine ganze Zahl von 1 bis 4 bedeuten, mit den Bedingungen, daß b und c nicht gleichzeitig jeweils = 0 bedeuten und die Summe aus a + e gleich 6 ist und die Liganden ($CH_bF_c(CF_3)_d$) gleich oder verschieden sein können, ausgenommen sind (DE 100 089 55). Das Verfahren zur Herstellung von Lithiumfluoralkylphosphaten der allgemeinen Formel (I) ist dadurch gekennzeichnet, daß wenigstens eine Verbindung der allgemeinen Formel

$$H_mP(C_nH_{2n+1})_{3-m} \qquad (III),$$

$$OP(C_nH_{2n+1})_3 \qquad (IV),$$

$$Cl_mP(C_nH_{2n+1})_{3-m} \qquad (V),$$

$$F_mP(C_nH_{2n+1})_{3-m} \qquad (VI),$$

$$Cl_oP(C_nH_{2n+1})_{5-o} \qquad (VII),$$

$$F_oP(C_nH_{2n+1})_{5-o} \qquad (VIII),$$

in denen jeweils
$0 \leq m \leq 2$, $3 \leq n \leq 8$ und $0 \leq o \leq 4$ bedeutet,
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz der allgemeinen Formel (I) nach den üblichen Methoden gereinigt und isoliert wird.

Die Additive können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. -oxihydroxide in das entsprechende Oxid übergeführt werden.

Die Additive können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind, indem die Partikel in einem organischen Lösungsmittel suspendiert werden, die Suspension mit einer Lösung einer hydrolisierbaren Metallverbindung und einer Hydrolyselösung versetzt und danach die beschichteten Partikel abfiltriert, getrocknet und gegebenenfalls calciniert werden. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Additive in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden.

Nachfolgend wird ein allgemeines Beispiel der Erfindung näher erläutert.

Darstellung des Zwischenproduktes (II):

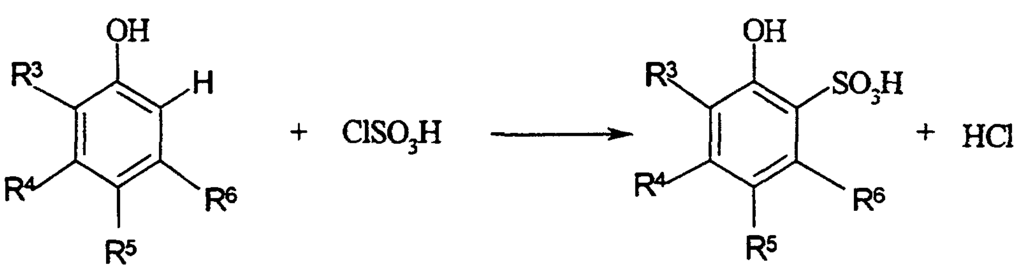


(III) (IV)

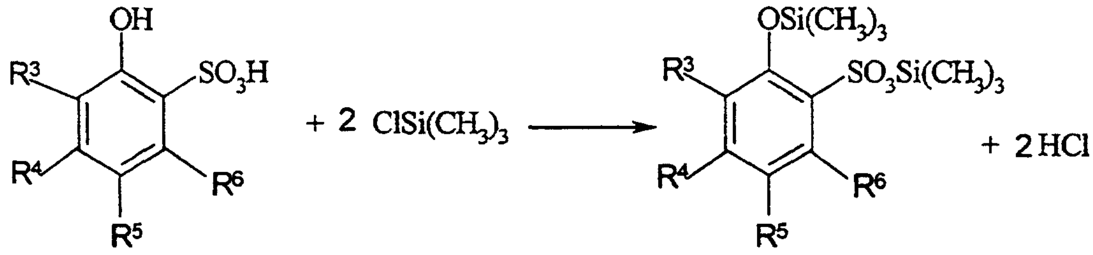


(IV) (II)

3-, 4-, 5-, 6-substituiertes Phenol (III) wird unter Schutzgasatmosphäre (Argon oder Stickstoff) in einem geeigneten Lösungsmittel gelöst. Zu dieser Lösung werden innerhalb von 30 min bis 2 Stunden bei Temperaturen zwischen 10 und 30°C, bevorzugt bei Raumtemperatur, ein 5-20%-iger Überschuß Chlorsulfonsäure zugegeben. Das ausgefallene Produkt (IV) wird nach einer Reaktionszeit von 20 bis 40 Stunden, in der Regel nach 24 Stunden, unter Schutzgasatmosphäre abgesaugt, mit einem geeigneten Lösungsmittel gewaschen und im Vakuum getrocknet.

Zu diesem Zwischenprodukt (IV) wird unter Schutzgasatmosphäre ein 1,5 bis 4-facher Überschuß der stöchiometrischen Menge Chlortrimethylsilan gegeben und bis zum Siedepunkt erhitzt. Nach dem Abklingen der lebhaften HCl-Entwicklung wird noch einmal die gleiche Menge Chlortrimethylsilan zugegeben und die Lösung 50-100 Stunden unter Rückfluß erhitzt. Das ausgefallene Edukt wird nach dem Erkalten unter Schutzgasatmosphäre abfiltriert. Das überschüssige Chlortrimethylsilan wird bei leicht vermindertem Druck entfernt und das Zwischenprodukt der allgemeinen Formel (II) durch fraktionierte Destillation isoliert.

Umsetzung zum Lithiumkomplexsalz:

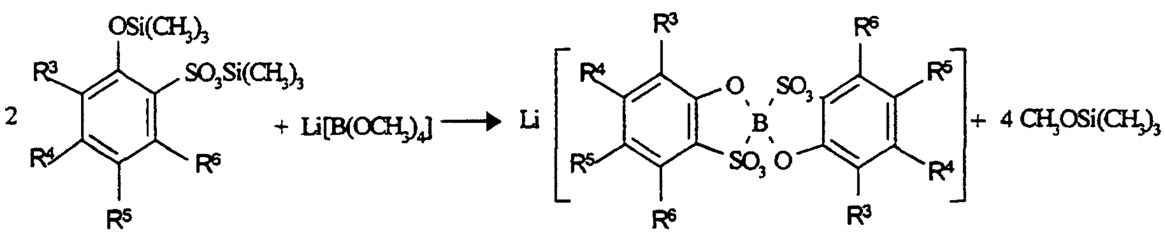


(II) (I)

Zur Herstellung des Lithiumkomplexsalzes (I) wird Lithiumtetraalkoholatoborat in einem polaren aprotischen Lösungsmittel unter Schutzgasatmosphäre vorgelegt. Als Lösungsmittel kann ein Lösungsmittel aus der Gruppe Acetonitril, Aceton, Nitromethan, Dimethylformamid, Dimethylacetamid, Dimethylsulfoxid, Dimethylcarbonat, Diethylcarbonat, Propylencarbonat, Butylencarbonat und Methylethylcarbonat verwendet werden. Nach der Zugabe stöchiometrischer Mengen des Zwischenproduktes (II) wird eine halbe Stunde bis 5 Stunden, bevorzugt 45 min bis 90 min, bei Temperaturen zwischen 40 und 70°C gerührt. Das gebildete Silan und das Lösungsmittel werden unter leicht vermindertem Druck entfernt und das Rohprodukt bis zur Gewichtskonstanz im Vakuum getrocknet. Das Rohprodukt wird aus einem geeigneten Lösungsmittel oder Lösungsmittelgemisch umkristallisiert und anschließend bis zur Gewichtskonstanz im Vakuum getrocknet.

Die nachfolgenden Beispiele sollen die Erfindung näher erläutern, ohne sie jedoch zu beschränken.

Beispiele

Beispiel 1

5-Fluoro-2-hydroxybenzolsulfonsäure

200 g (1.78 mol) 4-Fluorphenol wird unter Stickstoff-Atmosphäre in 1300 ml $CHCl_3$ (destilliert, über $CaCl_2$ getrocknet) gelöst. Zu dieser Lösung tropft man innerhalb 1 Stunde bei Raumtemperatur unter Rühren 131 ml (229 g = 1.96 mol) Chlorsulfonsäure, wobei man anfangs eine lebhafte HCl-Entwicklung beobachtet, die 30 min nach Beendigung abklingt und nach weiteren 3 Stunden vollständig beendet ist. Das ausgefallene Produkt wird nach einer Reaktionszeit von 24 Stunden bei Raumtemperatur unter Schutzgas abgesaugt, 2 mal mit je 200 ml $CHCl_3$ gewaschen und im Vakuum bei 1333 Pa und Raumtemperatur in 3 Stunden getrocknet.

Das Produkt ist ein grauweißes, stark hygroskopisches Pulver.
Ausbeute: 302 g (88%)
Schmelzpunkt: 110-114°C (geschlossene Kapillare)
$^1$H-NMR (250 MHz, [$D_6$] DMSO):
$\delta$ = 6.77 (dd, $^3J_{H3-H4}$=8.9 Hz, $^4J_{H3-F}$=4.6 Hz, 1H, H-3),
7.04 (dt, $^3J_{H4-H3}$=8.9 Hz, $^4J_{H4-H6}$=3.3 Hz, $^3J_{H4-F}$=8.9 Hz, 1H, H-4),
7.16 (dd, $^3J_{H6-F}$=8.4 Hz, $^4J_{H6-H4}$=3.3 Hz, 1H, H-6),
12.32 (br. s, 2H, OH, $SO_3H$)
$^{13}$C-NMR (62.9 MHz, [$D_6$]DMSO):
$\delta$ = 113.46 (+, d, $^2J_{C-F}$=24.0 Hz, C-6),
118.47 (+, d, $^3J_{C-F}$=7.4 Hz, C-3),
118.53 (+, d, $^2J_{C-F}$=23.0 Hz, C-4)
131.79 ($C_{quart}$, d, $^3J_{C-F}$=5.8 Hz, C-1),
150.22 ($C_{quart}$, d, $^4J_{C-F}$=1.8 Hz, C-2),
155.10 ($C_{quart}$, d, $^1J_{C-F}$=236.3 Hz, C-5)
MS (70 eV, EI), m/z (%):
194 (2) [$M^+$+2], 193 (3) [$M^+$+1], 192 (54) [$M^+$], 174 (44), 126 (23), 110 (65), 98 (15), 82 (100), 63 (16), 57 (20)
$C_6H_5O_4FS$: gef. 191.9892 (korrekte HRMS)

Beispiel 2

5-Fluor-2-trimethylsilyloxy-benzolsulfonsäuretrimethylsilylester

Zu 302 g (1.57 mol) 5-Fluoro-2-hydroxybenzolsulfonsäure gibt man unter Schutzgasatmosphäre bei Raumtemperatur unter Rühren 794 ml (683 g, 6.28 mol) Chlortrimethylsilan und erhitzt die Mischung bis zum Sieden. Nach Abklingen der lebhaften HCl-Entwicklung werden noch einmal 794 ml Chlortrimethylsilan zugegeben und die trübe Lösung 96 Stunden unter Rückfluß erhitzt. Der ausgefallene Niederschlag wird nach Erkalten unter Schutzgas abfiltriert, das überschüssige Chlortrimethylsilan bei 40-50°C unter leicht vermindertem Druck (ca, 4000 Pa) entfernt und das Produkt durch fraktionierte Destillation im Vakuum gewonnen.

Das Produkt ist eine farblose, viskose, stark hydrolyseempfindliche Flüssigkeit.
Ausbeute: 496 g (93%)
Siedepunkt: 93-96°C/1,333 Pa
$^1$H-NMR (250 MHz, $CDCl_3$):
$\delta$ = 0.32 (s, 9H, OTMS),
0.36 (s, 9H, OTMS),
6.87 (dd, $^3J_{H3-H4}$=9.0 Hz, $^4J_{H3-F}$=4.3 Hz, 1H, H-3),
7.16 (ddd, $^3J_{H4-H3}$=9.0 Hz, $^4J_{H4-H6}$=3.2 Hz, $^3J_{H4-F}$=7.6 Hz, 1H, H-4),
7.57 (dd, $^4J_{H6-H4}$=3.2 Hz, $^3J_{H6-F}$=8.0 Hz, 1H, H-6)
$^{13}$C-NMR (62.9 MHz, $CDCl_3$):
$\delta$ = 0.38 (+, OTMS),
0.43 (+, OTMS),
116.23 (+, d, $^2J_{C-F}$=26.4 Hz, C-6),
121.08 (+, d, $^2J_{C-F}$=23.0 Hz, C-4),
121.70 (+, d, $^3J_{C-F}$=7.4 Hz, C-3),
130.99 ($C_{quart}$, d, $^3J_{C-F}$=7.3 Hz, C-1),
149.82 ($C_{quart}$, d, $^4J_{C-F}$=2.6 Hz, C-2),

155.77 ($C_{quart}$, d, $^{1}J_{C-F}$=243.2 Hz, C-5)
MS (70eV, EI), m/z (%): 336 (3) [$M^{+}$], 321 (33), 264 (43), 249 (60), 233 (96), 169 (39), 147 (59), 75 (100), 73 (76), 45 (18)
$C_{12}H_{21}O_{4}FSSi_{2}$: gef. 336.0683 (korrekte HRMS)

| Elementaranalyse | %C | %H |
|---|---|---|
| berechnet | 42.82 | 6.29 |
| gefunden | 42.57 | 6.30 |

Beispiel 3

Lithiumbis[5-fluoro-2-olato-benzolsulfonato(2-)O, O']borat(1-)

2.81 g (19.8 mmol) Lithiumtetramethanolatoborat(1-) werden unter Schutzgas in 100 ml Dimethylcarbonat (DMC) suspendiert. Nach Zugabe von 13.35 g (39.7 mmol) 5-Fluor-2-trimethylsilyloxybenzolsulfonsäuretrimethylsilylester entsteht eine klare Lösung. Diese wird eine Stunde bei 45-50°C gehalten, wobei eine leichte Trübung eintritt. Das gebildete Silan wird zusammen mit dem Lösungsmittel bei 50°C unter leicht vermindertem Druck abgezogen und das erhaltene Rohprodukt 24 Stunden bei 70°C im Ölpumpenvakuum getrocknet. Das Rohprodukt wird viermal aus Toluol/DMC umkristallisiert. Eine bei den ersten zwei Reinigungsschritten auftretende Trübung wird durch Filtration über eine Glasfritte entfernt. Das Lithiumsalz wird bis zur Gewichtskonstanz im Vakuum bei 1 bis 10 Pa bei einer Temperatur von 70°C getrocknet.
Das Produkt fällt in Form farbloser Kristallnadeln an.
$^{1}$H-NMR (250 MHz, [$D_6$] DMSO):
$\delta$ = 7.08 (dd, $^{3}J_{H3-H4}$=8.9 Hz, $^{4}J_{H3-F}$=4.4 Hz, 2H, H-3, H-3'),
7.40 (dt, $^{3}J_{H4-H3}$=8.9 Hz, $^{4}J_{H4-H6}$=3.2 Hz, $^{3}J_{H4-F}$=8.9 Hz, 2H, H-4, H-4'),
7.50 (dd, $^{4}J_{H6-H4}$=3.2 Hz, $^{3}J_{H6-F}$=8.9 Hz, 2H, H-6, H-6')
$^{13}$C-NMR (62.9 MHz, [$D_6$DMSO]):
$\delta$ = 110.6 (+, d, $^{2}J_{C-F}$=25.7 Hz, C-6),
121.3 (+, d, $^{2}J_{C-F}$=22.9 Hz, C-4)
121.4 (+, d, $^{3}J_{C-F}$=7.9 Hz, C-3)
125.3 ($C_{quart}$, $^{3}J_{C-F}$=7.6 Hz, C-1)
148.9 ($C_{quart}$, $^{4}J_{C-F}$=2.2 Hz, C-2)
155.2 ($C_{quart}$, $^{1}J_{C-F}$=240.0 Hz, C-5)
AAS: Lithiumgehalt:

| | | | |
|---|---|---|---|
| berechnet | 1.74% | gefunden | 1.75% |

Beispiel 4

Oxidationsstabilität von Lithiumbis[5-fluoro-2-olato-benzolsulfonato (2-)O, O']borat(1-)

In einer Meßzelle mit Platinarbeitselektrode, Lithiumgegenelektrode und Lithiumreferenzelektrode wurden jeweils 5 Zyklovoltammogramme hintereinander aufgenommen. Hierzu wurde ausgehend vom Ruhepotential das Potential zuerst mit einer Vorschubgeschwindigkeit von 10 mV/s auf 5 V gegen Li/$Li^{+}$ erhöht und im weiteren Verlauf zurück auf das Ruhepotential gefahren.
Elektrolyt: 0.42 mol/$kg_{Lm}$ Lithiumbis[5-fluoro-2-olatobenzolsulfonato(2-)O, O']borat(1-) in EC/DMC (1:1)
Das Oxidationspotential konnte zu 4,5 V gegen Li/$Li^{+}$ bestimmt werden.

## Patentansprüche

1. Verfahren zur Herstellung von Lithiumkomplexsalzen der allgemeinen Formel

Li 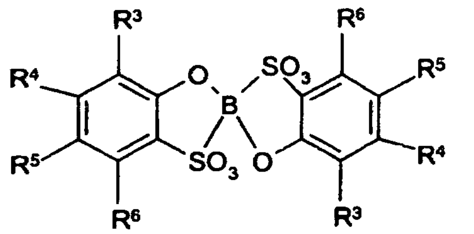 (I)

wobei

$R^3$-$R^6$ jeweils einzeln oder paarweise, gegebenenfalls durch eine Einfach oder Doppelbindung direkt miteinander verbunden, folgende Bedeutung haben können:

1. Alkyl ($C_1$ bis $C_6$),Alkyloxy ($C_1$ bis $C_6$) oder Halogen (F, Cl, Br)
2. ein aromatischer Ring aus den Gruppen
Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,
Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,

**dadurch gekennzeichnet, daß**

a) 3-, 4-, 5-, 6-substituiertes Phenol (III)

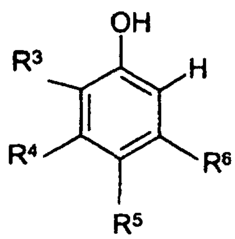 (III)

,

wobei $R^3$-$R^6$ eine bei Formel (I) angegebene Bedeutung haben,
in einem geeigneten Lösungsmittel mit Chlorsulfonsäure versetzt wird,
b) das Zwischenprodukt (IV) aus a)

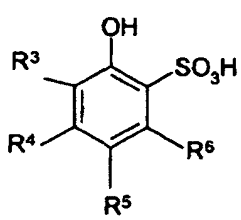 (IV)

,

wobei $R^3$-$R^6$ eine bei Formel (I) angegebene Bedeutung haben,
mit Chlortrimethylsilan umgesetzt, filtriert und fraktioniert destilliert wird,
c) das Zwischenprodukt (II) aus b)

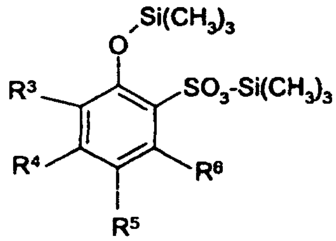

(II)

,

wobei $R^3$-$R^6$ eine bei Formel (I) angegebene Bedeutung haben,
mit Lithiumtetramethanolatborat(1-), in einem geeigneten Lösungsmittel umgesetzt und daraus das Endprodukt (I) isoliert wird.

**2.** Verfahren zur Herstellung von Verbindungen der allgemeinen Formel (II)

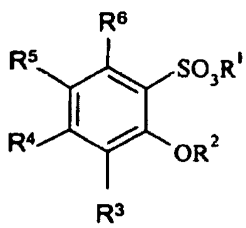

(II)

wobei $R^1$ und $R^2$ jeweils einzeln oder gemeinsam folgende Bedeutung haben:

$R^1$, $R^2$: H und Trimethylsilyl,
$R^3$-$R^6$ können jeweils einzeln oder paarweise, gegebenenfalls durch eine Einfach oder Doppelbindung direkt miteinander verbunden, folgende Bedeutung haben:

1. Alkyl ($C_1$ bis $C_6$), Alkyloxy ($C_1$ bis $C_6$) oder Halogen (F, Cl, Br)
2. ein aromatischer Ring aus den Gruppen
Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,
Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,

**dadurch gekennzeichnet, daß** die Verfahrensschritte a) und b) gemäß Anspruch 1 durchgeführt werden.

**3.** Verfahren gemäß Anspruch 1, **dadurch gekennzeichnet, daß** das Zwischenprodukt (II) in Schritt c) in einem polaren aprotischen Lösungsmittel suspendiert wird.

## Claims

**1.** Method of preparing lithium complex salts of the general formula

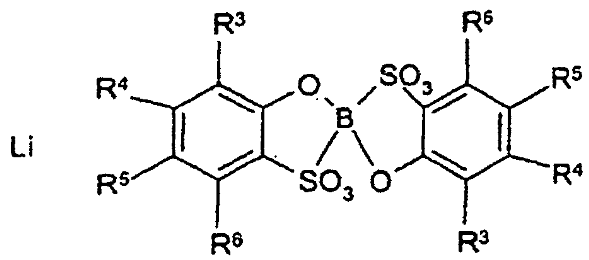

(I)

where

$R^3$-$R^6$ can each, individually or pairwise, being directly linked or not directly linked to one another via a single or double bond, have the following meaning:

1. alkyl ($C_1$ to $C_6$), alkyloxy ($C_1$ to $C_6$) or halogen (F, Cl, Br)
2. an aromatic ring from the groups

phenyl, naphthyl, anthracenyl or phenanthrenyl, which can be unsubstituted or mono- to hexasubstituted by alkyl ($C_1$ to $C_6$), alkoxy groups ($C_1$ to $C_6$) or halogen (F, Cl, Br),

pyridyl, pyrazyl or pyrimidyl, which can be unsubstituted or mono- to tetrasubstituted by alkyl ($C_1$ to $C_6$), alkoxy groups ($C_1$ to $C_6$) or halogen (F, Cl, Br) ,

**characterized in that**

a) 3-, 4-, 5-, 6-substituted phenol (III)

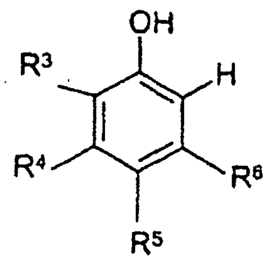

(III)

,

where $R^3$-$R^6$ have a meaning given under formula (I), in a suitable solvent is admixed with chlorosulfonic acid,

b) the intermediate (IV) from a)

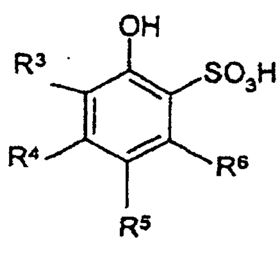

(IV)

,

where $R^3$-$R^6$ have a meaning given under formula (I), is reacted with chlorotrimethylsilane, and the product is filtered and subjected to fractional distillation,

c) the intermediate (II) from b)

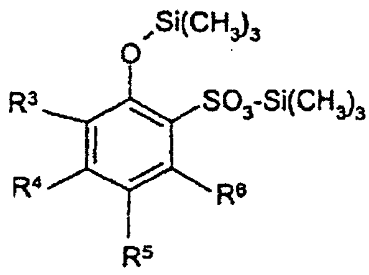

(II)

,

where $R^3$-$R^6$ have a meaning given under formula (I), is reacted with lithium tetramethanolate borate (1-) in a suitable solvent and the end product (I) is isolated therefrom.

**2.** Method of preparing compounds of the general formula (II)

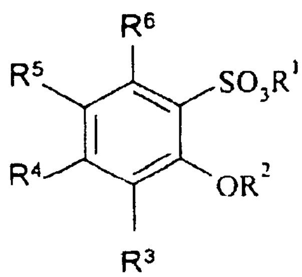

(II)

where $R^1$ and $R^2$ each, individually or jointly, have the following meanings:

$R^1$, $R^2$: H and trimethylsilyl,

$R^3$-$R^6$ can each, individually or pairwise, being directly linked or not directly linked to one another via a single or double bond, have the following meaning:

1. alkyl ($C_1$ to $C_6$), alkyloxy ($C_1$ to $C_6$) or halogen (F, Cl, Br)
2. an aromatic ring from the groups
phenyl, naphthyl, anthracenyl or phenanthrenyl, which can be unsubstituted or mono- to hexasubstituted by alkyl ($C_1$ to $C_6$), alkoxy groups ($C_1$ to $C_6$) or halogen (F, Cl, Br),
pyridyl, pyrazyl or pyrimidyl, which can be unsubstituted or mono- to tetrasubstituted by alkyl ($C_1$ to $C_6$), alkoxy groups ($C_1$ to $C_6$) or halogen (F, Cl, Br),

**characterized in that** the steps a) and b) of the method according to Claim 1 are carried out.

**3.** Method according to Claim 1, **characterized in that** the intermediate (II) in step c) is suspended in a polar aprotic solvent.

**Revendications**

**1.** Procédé de fabrication de sels complexes de lithium de formule générale

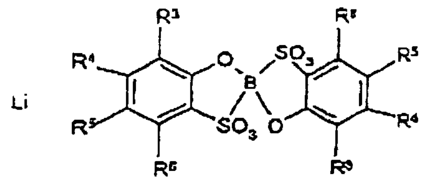

(I)

$R^3$-$R^6$, chacun, individuellement ou par paire, le cas échéant liés ensemble directement par une liaison simple ou une liaison double, pouvant avoir la signification suivante:

1. un radical alkyle ($C_1$ à $C_6$), alkyloxy ($C_1$ à $C_6$) ou un halogène (F, Cl, Br)

2. un cycle aromatique choisi parmi les groupements

- phényle, naphtyle, anthracényle ou phénanthrényle, qui peut être non substitué ou une à six fois substitué, par un radical alkyle ($C_1$ à $C_6$), des groupements alkoxy ($C_1$ à $C_6$) ou un halogène (F, Cl, Br),

- pyridyle, pyrazyle ou pyrimidyle, qui peut être non substitué ou une à quatre fois substitué, par un radical alkyle ($C_1$ à $C_6$), des groupements alkoxy ($C_1$ à $C_6$) ou un halogène (F, Cl, Br),

**caractérisé en ce que**

a) un phénol (III), substitué en positions 3, 4, 5, 6,

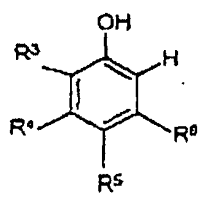

(III)

$R^3$-$R^6$ ayant la signification indiquée dans le cas de la formule (I), est mélangé dans un solvant approprié avec de l'acide chlorosulfonique,
b) le produit intermédiaire (IV) venant de l'étape a)

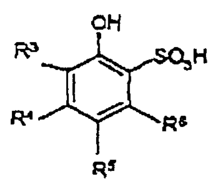

(IV)

$R^3$-$R^6$ ayant la signification indiquée dans le cas de la formule (1),
réagit avec le chlorotriméthylsilane, est filtré et subit une distillation fractionnée,
c) le produit intermédiaire (II), venant de l'étape b)

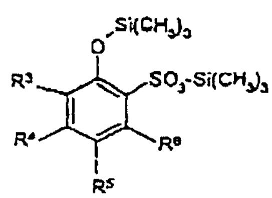

(II)

$R^3$-$R^6$ ayant la signification indiquée dans le cas de la formule (I), réagit, dans un solvant approprié, avec le borate(1-) de lithiumtétraméthanolate et **en ce que** le produit final (I) qui en résulte est isolé.

**2.** Procédé de fabrication de composés de la formule générale (II)

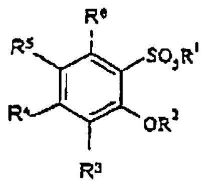

(II)

$R^1$ et $R^2$, chacun ou conjointement, ayant la signification suivante :

$R^1$, $R^2$: H et le radical triméthylsilyle,

$R^3$-$R^6$, chacun, individuellement ou par paire, le cas échéant liés ensemble directement par une liaison simple ou une liaison double, pouvant avoir la signification suivante:

1. un radical alkyle ($C_1$ à $C_6$), alkyloxy ($C_1$ à $C_6$) ou un halogène (F, Cl, Br),

2. un cycle aromatique choisi parmi les groupements

- phényle, naphtyle, anthracényle ou phénanthrényle, qui peut être non substitué ou une à six fois substitué, par un radical alkyle ($C_1$ à $C_6$), des groupements alkoxy ($C_1$ à $C_6$) ou un halogène (F, Cl, Br),
- pyridyle, pyrazyle ou pyrimidyle, qui peut être non substitué ou une à quatre fois substitué, par un radical alkyle ($C_1$ à $C_6$), des groupements alkoxy ($C_1$ à $C_6$) ou un halogène (F, Cl, Br),

**caractérisé en ce que** les étapes de procédé a) et b) sont effectuées selon la revendication 1.

**3.** Procédé selon la revendication 1, **caractérisé en ce que** le produit intermédiaire (II) est mis en suspension dans l'étape c) dans un solvant aprotique polaire.